# EUROPEAN PATENT APPLICATION

(11) **EP 4 683 293 A1**
(43) Date of publication of application: **21.01.2026**
(21) Application number: 24189501.0
(22) Date of filing: 18.07.2024
(51) Int. Cl.: H04L 45/7452, H04L 69/22, H04L 47/2483

(54) **FAST EVALUATION AND DISPATCHING OF HIGH STREAM COUNT**

(71) Applicant: EVS Broadcast Equipment SA, 4102 Seraing (BE)
(72) Inventor: Spanjers, Jasper, 5237PH Den Bosch (NL)
(74) Representative: Rossmanith, Manfred

(57) **Abstract**

The present disclosure relates a method for evaluating packets of subscribed data streams comprising receiving incoming data packets belonging to a plurality of data streams; buffering the incoming data packets in a raw packet buffer; extracting the first words of the incoming data packets and forwarding the extracted first words to a packet header buffer; evaluating the first words in the packet header buffer, wherein the evaluation comprises extracting information identifying a data stream, performing a binary search on the extracted information to determine whether the incoming data packet from which the information was extracted belongs to one of the subscribed data streams, storing the result in a packet evaluation result buffer; determining based on the result whether a data belongs a subscribed stream; reading, in case the data packet in the raw packet buffer belongs to one of the subscribed streams, the data packet from the raw packet buffer.

## Description

### Field

The present disclosure relates to a network product (e.g. an Ethernet product) or processing device for fast evaluation and dispatching of a high number of incoming data streams or media data streams which are also referred to as content streams. The data streams may be broadcast data streams, for example data streams of a live production. The present disclosure also relates to a method for fast evaluation and dispatching of a high number of incoming data streams. The method can be implemented by a processing device according to the present disclosure.

### Background

In a modern broadcast facility many media streams, for instance 100-1000 streams need to be managed. In a specific production only a limited number of streams is required that need to be filtered from a network providing all streams. The streams required or selected by a device are called "subscribed streams". Only the subscribed streams are processed by the device to save processing power and hardware resources. Thus, a processing device connected to the data network needs to perform some kind of filtering to limit the processing on the subscribed streams. Further, a processing device may also need to attach meta-data or bookkeeping data to the subscribed streams. Providing such data to the streams allows, for example, to perform processing and routing decisions on a per stream basis.

Incoming packets that are not meant for the product have to be discarded while packets from subscribed data streams have to pass. In FPGA based products, which process only a limited number of streams, for example relatively low bandwidth (<=10Gbit) products, special dedicated matchers might be instantiated to check the contents of a data stream. A matcher is dedicated to a single stream. The matcher compares stream properties like IP-address, port number, Ethernet type, VLAN-ID, SRC IP-ADDR, DST IP-ADDR, DST PORT #, etc.. For packet data streams, the stream properties are comprised in or can be derived from a packet header of each packet of the data stream.

Depending on whether the matcher can match the properties to a predetermined value or a set of values, which identify the dedicated stream of the matcher, the data stream is either passed or dropped. The matcher comprises very simple logic and is easy to implement; a single matcher filters the packets of one single stream. In fact, the matcher only compares the properties of each incoming data packet with the predetermined value or set of values, which identifies whether a data packet belongs to the stream dedicated to the matcher. Comparing incoming properties with only one value or set of values makes the logic simple and easy to implement. In particular, since a matcher only has to store one predetermined value or set of values and to check whether a part of the header matches this predetermined value or set of values. This is meant with the matcher being dedicated to one data stream. The matcher only stores the value or set of values identifying that stream and tries to match the incoming data packet to the stored values. Accordingly, the matcher only checks whether the data packet belongs to the dedicated data stream of the matcher. According to this concept, for each incoming data stream one matcher is required.

This solution is suitable for a limited number of streams, for example from 8 to 32 streams depending on the size of the FPGA. However, to support a larger number of concurrent data streams the solution becomes unfeasible, because it is not scalable. Even if the matchers are small in resources, having more than 128 matchers is very challenging - if not impossible. As more and more streams have to be supported in broadcast applications, more and more matchers have to be instantiated, causing all kinds of FPGA resource issues like routing, timing, resource consumption, etc. For example, the large number of matchers simply may not fit into the FPGA or may cause severe almost unsolvable timing issues. Thus, scaling the matcher solution, wherein each subscribed stream is identified by a single dedicated matcher, is unfeasible for a large number of streams.

There are a few solutions to support a high number of data streams for broadcast solutions known in the prior art. The device could have a long list of subscriptions and evaluate the data streams linearly by searching for each stream in a list. Such a solution consumes only a small amount of resources and supports a high number of streams. However, the performance becomes very bad with the high number of streams as the complexity class of the linear evaluation is O(n).

Another solution is to perform a search within a list of subscribed streams. However, searching different incoming properties in a list is time consuming and causes undesired latency in the system. A different solution is to directly match the search properties to an item in the list of subscriptions. The performance of this approach may correspond to a complexity class of O(1), however, the approach only works with constrained packet properties , which is typically not suitable for a large number of streams.

In view of the above limitations of existing network products and processing devices there remains a desire for a network product or processing device that provides a scalable solution that reduces the latency and the amount of required FPGA resources and improves the net bandwidth when evaluating a large number of streams. In addition, the solution allows to make FPGA timing closure easier.

### Description of the invention

A different mechanism is implemented by the present disclosure in order to provide a more scalable solution.

According to a first aspect of the invention a method is suggested that evaluates and dispatches data packets of a plurality of data streams, and delivers the data packets of subscribed data streams as output, wherein the method comprises: receiving incoming data packets belonging to a plurality of data streams; buffering the incoming data packets in a raw packet buffer, extracting the first n words of the incoming data packets and forwarding the extracted first n words of the incoming data packets to a packet header buffer, evaluating the first n words of the incoming data packets that are available in the packet header buffer, wherein the evaluating comprises: extracting from the first n words of the incoming packets information identifying a data stream, performing a binary search on the extracted information to determine whether the incoming data packet from which the information was extracted belongs to one of the subscribed data streams, storing the result of the binary search in a packet evaluation result buffer, the method further comprising: determining based on the result of the binary search whether a data packet associated with the result in the raw packet buffer belongs to one of the subscribed streams, reading, in case the data packet in the raw packet buffer belongs to one of the subscribed streams, the data packet from the raw packet buffer and providing the packet to the output.

The method can be applied in modern broadcast applications, where typically 100 to 4000 data or media streams are present in an Ethernet network. For example, Ethernet connectivity can allow for multiple true 100 Gb/s, 40Gb/s or 10 Gb/s ports. A network product connected to the network, however, shall typically only process a selection or limited number of these data streams. Further, a network product may also need to connect meta-data or bookkeeping data to the subscribed streams. Providing such data to the streams allows, for example, to perform processing and routing decisions on a per stream basis. A data stream can be a video or an audio stream. A data stream can be an ANC (ancillary) stream, a stream of IGMP-packets, ARP-packets or the like. A data stream comprises packets, for example at the MAC (media access control) layer each data stream comprises MAC packets. Each packet comprises a header, for example a MAC header. The header includes properties, for example a value or a set of values that identify the data stream to which the packet belongs. A network product must filter the incoming data packets for the selection of data streams the network product shall process. The selection of data streams corresponds to the data streams to which the network product is subscribed to. The method according to the invention allows to evaluate all received data packets in order to determine whether the data packets belong to a subscribed data stream of the network product. In case the evaluation determines that a data packet belongs to a subscribed data stream, the method delivers the data packet as output. All other data packets are discarded. The method buffers the incoming data packets in a raw packet buffer. All incoming data packets are stored in the raw packet buffer in the order the packets are received. The packets are stored or buffered in the raw packet buffer in order to allow for look-ahead evaluation of the data packets, i.e. the data packets are evaluated prior to being read from the raw packet buffer. The method can evaluate the next to be read data packet or any following data packet while the current data packet is read from the raw packet buffer. From every received data packet, the first n words are extracted and forwarded to a packet header buffer. A word is a segment of data of a packet having a particular size, for example a fixed size group of bits or bytes, in particular a word can be 32-bits long. Each packet comprises a packet header. N is the number of words extracted from the header. The first n words can contain the header. The first n words can contain the information necessary to identify whether the packet belongs to a subscribed data stream. Therefore, it is not necessary to extract the full header of a packet, instead is suffices to extract as many of the first n words of a packet such that the extracted words allow to determine to which data stream the packet belongs. Extracting only the first n words, therefore, saves resources, since only the parts necessary to identify the data stream are processed. From the first n words, the information identifying the data stream is extracted. The extraction can be parsing the first n words in order to determine the content. The extraction can comprise decoding the first n words. The binary search performed on the extracted information, e.g. the first n words, allows to match the extracted information identifying the data stream against the information identifying the subscribed data streams. The extracted information may be matched against a sorted list comprising the corresponding information for the subscribed data streams. In other words, each entry in the sorted list contains data to match against the extracted stream properties. The sorted list may include meta-data/bookkeeping data for the particular streams. The meta-data/bookkeeping data may be used by the downstream logic to further process the packet. In case the high-performance binary search determines that the extracted information corresponds to a subscribed stream, the result of the high-performance binary search is that the data packet belongs to a subscribed stream. The result may be an indication that the data packet belongs to a subscribed stream. The indication may be a flag. The result of the high-performance binary search may also include meta-data/bookkeeping data of the stream that has been associated with the packet. The result is associated with the corresponding data packet stored in the raw packet buffer. Based on the result a raw packet buffer reader determines whether the data packet to be read belongs to a subscribed data stream. In case the data packet belongs to a subscribed data stream, the reader reads the packet and forwards the packet to downstream logic. The reader may forward the data packet together with meta-data/bookkeeping data. In case the data packet does not belong to a subscribed data stream the packet is discarded. For example, the reader skips the data packet and proceeds with the next data packet to be read. The data packet of a subscribed stream is forwarded with the additional meta-data/bookkeeping data to an output. For example, for further processing of the data stream or for play out of the data stream.

By buffering the incoming data packet, the method allows to evaluate the next to be read data packet or data packets following the next to be read data packet prior to the read out. The evaluation of whether a next to be read data packet belongs to a subscribed stream can be in parallel with the read out of a current data packet. The evaluation of a data packet to be played out by a network product can take place several clock cycles before the play out. Therefore, the method can perform a complex binary search while avoiding the latency introduced by the complexity of the binary search. For example, the method can perform a binary search within a list of subscribed data streams matching data packets to the streams identified by the list. This allows to receive more than 100 to 1000 data streams while keeping resource usage low and performance high. The method, therefore, implements the more complex binary search instead of using a prior art matchers.

Preferably, the evaluating steps are performed ahead of the steps of determining and reading the data packet from the raw packet buffer. Performing the evaluation of the packet ahead of the reading step, allows to perform the more complex binary search while avoiding latency.

Preferably, the evaluation step starts several clocks cycles before reading the data packet from the raw packet buffer. Performing the evaluation several clock cycles prior to the read out ensures that the data packet can be read out when the reader accesses the raw packet buffer.

Preferably, the data packets belonging to one of the subscribed streams are read and outputted back-to-back. Therefore, the method avoids that latency is introduced by performing the more complex binary search ahead of the reading out and allows for a seamless play out of the subscribed streams.

Preferably, in case the data packet does not belong to one of the subscribed streams, the data packet is discarded. Discarding the data packet not belonging to a subscribed stream avoids processing of the data packet and therefore saves resources and processing power. Since a discarded packet is not forwarded, internal bandwidth is saved.

Preferably, in case the data packet does not belong to one of the subscribed streams, the method continues with determining whether the next data packet in the raw packet buffer belongs to a subscribed stream. In particular, the method may skip the discarded packet. Thus, in accordance with the method there is no need to read flush a discarded data packet from the raw packet buffer. The method does not process the packet and continues with the next data packet efficiently processing the incoming data packets.

Preferably, performing a binary search comprises: searching for the extracted information in a sorted list of one or more sets of values identifying the subscribed data streams. In other words, the list is a list identifying the subscribed streams. The list comprises the subscribed streams, wherein comprises means that the list includes at least an identifier for each of the subscribed streams. The list identifying the subscribed streams may comprise, for each stream, a value or values that are present in the header of a data packet belonging to one of the subscribed streams, in particular the value or values may be present in one or more of the first n-words of the data packet. Thus, an identification present in the header of a data packet and identifying the data stream to which the data packet belongs may be part of the list. Matching the extracted header information against the list, therefore, allows to determine whether a data packet belongs to a subscribed stream or not. This allows to perform a more efficient binary search. Performing a binary search may in addition comprise extracting meta-data/bookkeeping data form the sorted list that are associated with the streams identified by the list. Accordingly, the result of the binary search may include the meta-data/bookkeeping data.

Preferably, the method comprises performing a plurality of binary searches in parallel, wherein the sorted list is divided by the number of parallel binary searches and each of the parallel binary searches searches one different part of the list. By parallelizing the binary search, the time required for the binary search can be shortened. Splitting the list into a number of parts equal to the number of binary search units allows to parallelize the binary search and efficiently distribute the list between the different binary search units.

According to a second aspect of the invention a network product for evaluating and dispatching of data packets of a plurality of data streams is suggested that comprises a packet filtering unit, wherein the packet filtering unit comprises a raw packet buffer, and a writer and ingress good or bad evaluator configured to receive incoming data packets, to extract the first n words of the incoming data packets, and to provide the first n words of the incoming data packets to a packet header buffer, and to provide the incoming data packets to the raw packet buffer, wherein the raw packet buffer is configured to buffer the received packets, a look-ahead evaluator comprising: a packet header buffer, a header extractor, at least one binary search evaluator, a packet evaluation result buffer, the network product further comprising a reader and evaluation executor, and an output unit for outputting the subscribed content stream, wherein the look ahead evaluator evaluates the received first n words ahead of the corresponding packet, i.e. prior to being read by the reader from the raw packet buffer; and wherein the header extractor is configured to extract information identifying a data stream to which the packet belongs from the first n words associated with a received packet and to provide the extracted information to the binary search evaluator, wherein the high-performance binary search evaluator is configured to perform a binary search on the extracted information to determine whether the incoming data packet from which the information was extracted belongs to a subscribed data stream, and wherein the packet evaluation result buffer stores the result of the binary search, and wherein the reader and evaluation executor determines based on the result of the binary search whether a packet associated with the result in the raw packet buffer belongs to one of the subscribed streams, and reads, in case the packet in the raw packet buffer belongs to one of the subscribed streams, the packet from the raw packet buffer and provides the packet to the output. The binary search may further provide meta-data/bookkeeping data associated with the subscribed data stream to which the packet belongs. The result of the binary search may accordingly include the meta-data/bookkeeping data.

A network product may be connected to an Ethernet network in a broadcast facility. In such network a multitude of data streams, for example, audio or video streams are present. Each data stream comprises data packets. Each data packet comprises a header. The header of a data packet comprises information identifying the data stream to which the packet belongs. A network product processes a limited number of the data streams present on the network, i.e. the subscribed data streams of the network product. Therefore, the packet filtering unit must filter the data packets that belong to a subscribed data stream.

The packet filtering unit of the present invention allows to filter the data packet prior to processing or outputting the data packets of the subscribed streams. Further, the packet filtering unit allows to associate meta-data/bookkeeping data to the data packet. In particular, the look-ahead evaluator allows to evaluate whether a data packet belongs to a subscribed stream in parallel to buffering the data packet. Thus, the buffering of the data packets in the raw packet buffer allows to evaluate the first n words of the data packet or the packet header in order to determine to which data stream the data packet belongs. The evaluation result indicates whether the data packet belongs to a subscribed stream and is stored in an evaluation result buffer and associated with the corresponding data packet in the raw packet buffer. The reader only provides data packets to the output that have already been evaluated. The buffering of the data packets therefore allows to evaluate the next to be read data packet or data packets following the next to be read data packet while the current data packet is read. Therefore, the evaluation can take place several clock cycles prior to the read out. Thus, instead of one single matcher per stream as known from prior art systems, the look-ahead packet evaluator of the packet filter unit of the network product of the present disclosure performs a binary search while avoiding the latency introduced to the system by the more complex high-performance binary search. This allows a network product to receive >100-2000 streams while keeping resource usage low and performance high, at the cost of somewhat higher complexity.

According to an embodiment, the reader and evaluation executor outputs the data packets belonging to a subscribed data stream back-to-back. The reader and evaluation executor may forward the packet together with meta-data/bookkeeping data associated with the stream to which the data packet belongs. The network product accordingly is configured to evaluate the packets multiple clock cycles before the packets are read out in order to assure that the packets are evaluated prior to the read out. This allows for a seaming less play out of the subscribed streams.

Preferably, when the evaluation result indicates that the associated data packet does not belong to one of the subscribed streams the reader and evaluation executor discards the packet, in particular, the reader and evaluation executor is configured to skip a packet in the raw packet buffer in case the evaluation result indicates that the packet does not belong to one of the subscribed data stream. In other words, the reader jumps over the packet in the raw packet buffer. Therefore, there is no need to read flush the packet. This configuration improves the performance of the packet filtering unit and the network product.

Preferably, the binary search evaluator is configured to search for the extracted information in a sorted list of one or more sets of values identifying the subscribed data streams. Therefore, the list is a list identifying the subscribed streams. The list comprises the subscribed streams, wherein comprises means that the list includes at least an identifier for each of the subscribed streams. The list identifying the subscribed streams may comprise for each stream a value or values that are present in the header of a data packet belonging to one of the subscribed streams. Thus, an identification present in the header of a data packet and identifying the data stream to which the data packet belongs may be part of the list. Matching the extracted header information against the list, therefore, allows to determine whether a data packet belongs to a subscribed stream or not. This allows to perform a more efficient binary search. The sorted list may include meta-data/bookkeeping data for the particular streams. The meta-data/bookkeeping data may be used by the downstream logic to further process the packet.

This allows to perform a more efficient binary search.

Preferably, the binary search evaluator comprises a plurality of binary search evaluator units and is configured to perform a plurality of binary searches in parallel. By parallelizing the binary search the time required for the binary search can be shortened. Further, parallelizing the binary search allows to spread the logic over a FPGA. The logic for each parallel binary search evaluator is smaller, making it easier to place the logic and to route the corresponding signal within an FPGA.

Preferably, the sorted list is divided by the number of parallel binary search units into different parts, wherein each of the parallel binary search units searches one different part of the list. Splitting the list into a number of parts equal to the binary search unit allows to parallelize the binary search and efficiently distribute the list between the different binary search units.

According to a third aspect of the invention a computer program product is suggested that when executed on a processing unit performs the above-described method. Advantageously, the computer program product allows to utilize the present invention on any network product, in particular network products connected to an Ethernet network, for example in broadcast facilities.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a schematic block diagram of the system;
- Fig. 2: a schematic block diagram of the system;
- Fig. 3: a schematic block diagram of a processing device according to the present disclosure; and
- Fig. 4: a schematic flow diagram of a method of the present disclosure.

Same or similar elements in the figures are labeled with the same or similar reference signs. The flow of data streams is symbolized in the figures by arrows.

In the following the terms "IP packet" and "data packet" are used synonymously. The same applies to "media content" and a "media data".

### Detailed description

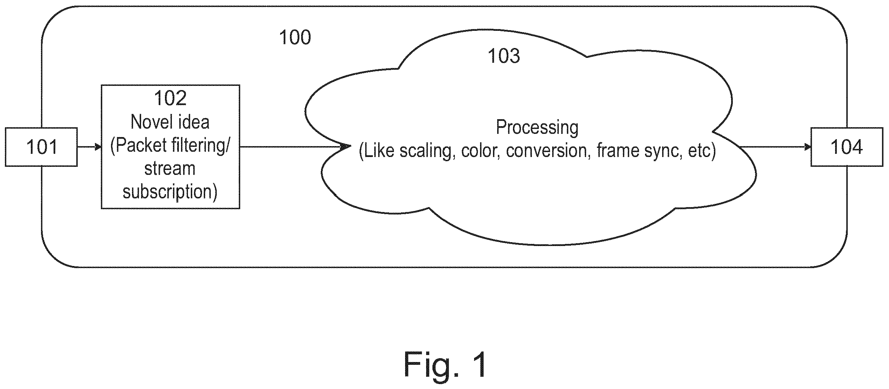

Fig. 1 shows a schematic representation of a network product 100 which may be subscribed to a number of data streams of a plurality of data streams. The network product may by an Ethernet product for broadcast applications receiving Ethernet traffic of multiple broadcast data streams. The data stream is a packet data stream. The packets, for example are MAC packets arriving at the MAC interface 101 of the network product or processing device 100. The packet may be any packet, as such the invention is not limited to MAC packets. The network product or processing device 100 may be subscribed to one or more data streams of a plurality of data streams. In order to process only the packets of the data streams to which the network product or processing device 100 is subscribed to, the network product or processing device has to filter the incoming packets. Further, the network product may attach respective meta-data/bookkeeping data to packets of one particular stream, i.e. the stream to which the packet it matched. The network product or processing device comprises a packet filtering unit 102. The packet filtering unit 102, for example, extracts the packet header and matches the packet header or information comprised in the packet header to one value or a set of values identifying a data stream to which the network product or the processing device 100 is subscribed to ("subscribed data stream"). In other words, there is a parameter or a set of parameters of the packet header that is the same for all packets of a data stream and different to all other data streams. Therefore, this value or set of values allows to identify the subscribed data stream. A packet can carry additional values that constrain the processing of particular packets. For example, only a specific SOURCE IP-address could be accepted by the device. In an embodiment, the extracted values from the first n-words of the data packet must not all be necessarily matched against a corresponding value in the list. The list may comprise wildcard values that allow more than one stream to be matched to the particular item of the list. For example, an entry in the list may be matched against several streams. The packet header or the first n-words of the packets of such streams may comprise a set of values that overlap. These overlapping values are identified by the list. The values of the header that are different for the different streams are considered wildcards. Thus, only some of the extracted values may be matched to the list resulting in the situation that packets from different streams may be matched to the same entry of the list. This concept provides more flexibility as it allows to identify subscribed stream by less values, for example the concept allows for one entry in the list to identify several subscribed streams depending on the wildcards in the identification. If a corresponding set of values of the packet header can be matched to this value or set of values, the data packet comprising this matched header belongs to the subscribed data stream. Incoming packets that do not belong to a subscribed data stream are discarded. Incoming data packets that do not belong to a subscribed stream may be forwarded to a specific output. For example, ARP, IGMP, LLDP packets which are not stream based are forwarded by default logic to a specific output. Thus, the method and the network product allow for filtering and the evaluation of packet-based streams, while still being able to handle non-IP based or non-stream based packets. Data packets that belong to a subscribed data stream are processed by a processing unit 103 of the device. The processing unit 103 processes the incoming subscribed data streams, for example a media data stream, in particular, media data streams containing image or video data. The processing unit 103 may process the incoming data stream with respect to scaling of the image or video data, color conversion, frame synchronization or the like. The processed data stream to which the network product or processing device 100 is subscribed to may subsequently be outputted by the network product or processing device 100 via an output MAC interface 104. The incoming Ethernet traffic may contain a plurality of data streams and corresponding data packets, in particular MAC packets. The network product or processing device 100 may only subscribe to a limited or predetermined number of the data streams provided by the incoming Ethernet traffic. Accordingly, the network product or processing device filters the incoming network product for the data streams for which the network product or processing device has a subscription. All other data packets provided by the incoming Ethernet traffic are discarded. The Ethernet traffic is processed at the MAC layer. Accordingly, the packet filtering may be performed on the MAC layer. In order to allow filtering of the data streams, to which the processing device is subscribed to, out of a large number, for example 100 to 1000, of incoming data streams received via the Ethernet traffic while keeping resource usage low and the performance high, the present disclosure provides a solution comprising a look-ahead evaluator, which performs a binary search.

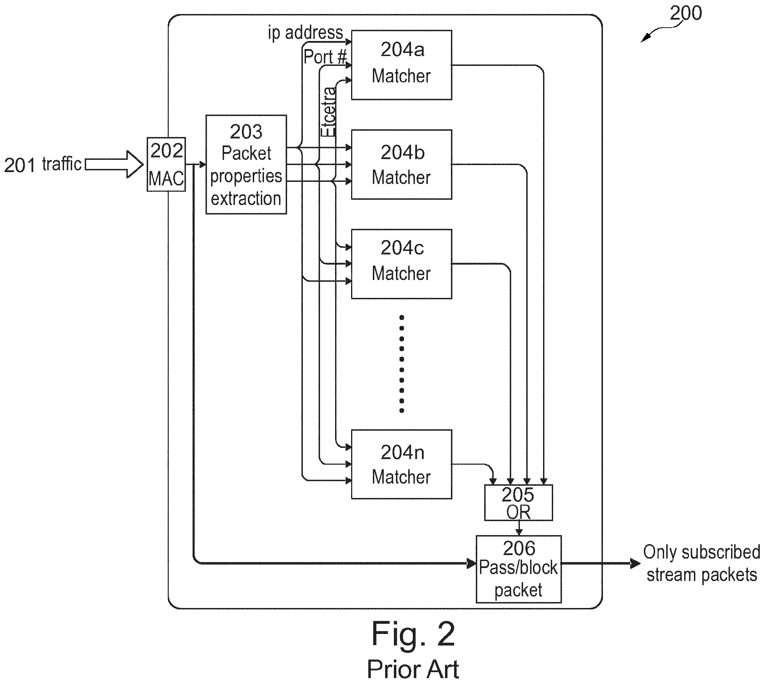

Fig. 2 shows a schematic overview of a prior art packet filtering unit 200 for stream subscription or packet filtering. The packet filtering unit 200 corresponds to the packet filtering unit 102 in Fig. 1.

Data packets 201 arrive at the MAC interface 202 of the packet filtering unit 200. The data packets can be MAC packets, i.e. packets on the MAC layer of the OSI model. The packet filtering unit 200 is an FPGA configured to perform the following operations and to provide the following functionalities. A packet properties extraction unit 203 extracts the properties of each incoming packet from the packet header, for example the destination IP address, the source IP-address, the destination IP port number, the Ethernet type, the VLAN-ID or any other property of the packet. The extracted properties can take up to 80 or more bits. The packet filtering unit 200 further comprises a plurality of dedicated matchers 204a to 204n. Each matcher 205a,..,205n is dedicated to one single stream, to which the packet filtering unit 200 is subscribed. The extracted properties are passed to every matcher 205a, ... , 205n. In parallel, for example simultaneously, the packets are forwarded from the MAC interface 202 to a pass/block packet unit 206.

The matchers 205a,... , 205n are configured to operate in parallel and to check the extracted information for one particular set of properties, which identifies the stream to which the matcher is dedicated. Each set of properties identifies a stream to which the packet filtering unit 200 is subscribed to. Thus, each matcher only checks for one set of properties, i.e. the matcher is dedicated to the stream identified by this set of properties. Each matcher provides an indication whether the current packet shall be passed or whether it shall be discarded. The indications of the matcher are logically OR'ed by OR'ing unit 205. The result of the OR'ing is provided to the pass/block unit 206 of the system. The system provides the current packet from the MAC interface to the pass/block unit 206, in parallel the system extracts the properties of each packet and provides it to the dedicated matcher. The matcher provides an indication whether to pass or block the packet. The indications are OR'ed and the result is provided to the pass/block unit 206. The properties extraction, the matching by the matchers, and the OR'ing is performed in parallel, for example simultaneously, with providing the packet from the MAC interface 202 to the pass/block unit 206. Thus, at the time the packet is received by the pass/block unit 206, the pass/block unit 206 has received the result of OR'ing of the indications of the matcher. Therefore, in case only one of the matchers 204a...204n matches the packet properties to the set of values identifying the stream to which the matcher is dedicated, the result of the OR'ing indicates that the packet shall be passed. Only in case none of the matchers could match the packet to its (the matchers) dedicated stream, the result of the OR'ing indicates that the packet shall be blocked or discarded. The matchers check for a single match with the set of values identifying the dedicated stream. This allows to operate the matchers fast enough to provide the indication to the pass/block unit 206 in parallel with the forwarding of the packet. The complexity class of such matcher is 0(1). In this configuration one dedicated matcher is necessary for each subscribed stream. Therefore, these known systems 200 do not scale well, although the matchers are small in resources, since each additional stream requires an additional matcher. For example, configuring an FPGA to provide more than 128 matchers is in principle not possible as such configuration does not fit on the FPGA. Further, because the matches are spread of the FPGA severe almost impossible to solve timing issues occur. Even if these timing issues could be solved, the solution would impact the performance in such a way that the system would not be suitable anymore.

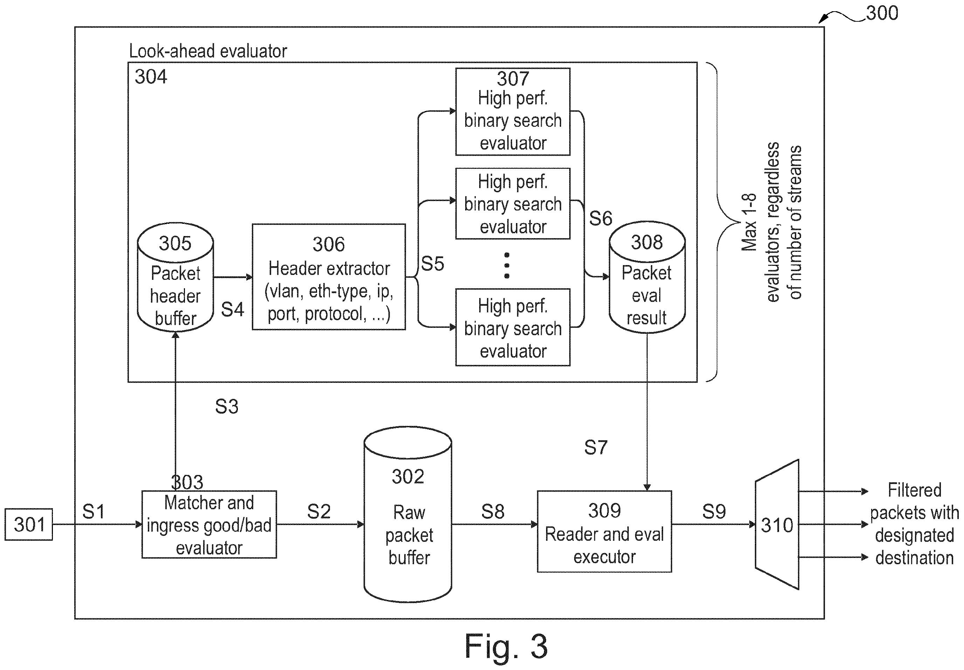

Fig. 3 is a schematic representation of a packet filtering unit 300 according to the present disclosure for replacing the packet filtering unit 102 in the network product 100 shown in Fig. 1. The packet filtering unit 300 is implemented as an FPGA. An advantage of using an FPGA is that the solution supports a high number of streams without the need for excessive logic while maintaining an accurate timing. The packet filtering unit 300 receives data packets of a multitude of data streams and is configured to determine for each incoming data packet whether the data packet belongs to a data stream to which the network product 100 is subscribed to. For example, in a broadcast application a network product may receive all data streams present in the network, however, the network product may only be subscribed to a number of data streams, which are processed by the network product. Only the data packets of subscribed streams are played out by the network product. Further, the network product may attach meta-data/bookkeeping data associated with a subscribed stream to the packets of that stream. Thus, the network product allows for proper processing and handling of the packet by the downstream logic based on the attached meta-data/bookkeeping data. To achieve this goal, packet filtering unit 300 evaluates at least part of the packet header prior to processing or playing out the data packet, for example, the network product may provide the processed subscribed stream to a play out device of a broadcast production. The result of the evaluation indicates whether a data packet belongs to a subscribed stream. The evaluation result is buffered until the corresponding data packet is read and played out by the packet filtering unit 300. Based on the evaluation result, the packet filtering unit 300 is able to only read and forward the data packets that belong to subscribed data streams.

The packet filtering unit 300, for example an FPGA based network product for broadcast productions, receives S1 incoming data packets 301 as traffic. The incoming traffic is Ethernet traffic. The incoming traffic 301 may comprise a plurality of data streams, for example audio or video data streams. The packet filtering unit 300 is subscribed to a subset of the plurality of incoming data streams. The network product which comprises the packet filtering unit 300 receives, for example, one to over 4000 data streams. The network product may, for example, be subscribed to 100 to over 2000 streams. Processing packets of over 2000 streams while achieving maximum bandwidth, for example 100 Gbit/s, requires that for each stream respective meta-data/bookkeeping data are attached to the packets of each stream in order to process each packet individually and properly with the downstream logic. A data packet may be a MAC packet comprising a header. The header includes properties of the data stream to which the packet belongs. These properties may depend on the packet filtering unit 300. The properties can, for example, be the destination source IP-address, the source IP address, the destination port number, the Ethernet type, the VLAN-ID etc. Typically, these properties can take up to more than 80 bits in the header of a data packet. Preferably, it suffices to extract the first n words of a packet including the part of the header comprising information identifying the data stream to which the packet belongs. In this scenario, n indicates the number of words extracted from the packet. Therefore, from the properties extracted from the header of a data packet it can be determined to which data stream the packet belongs.

The general idea of the present disclosure is that all incoming packets are stored in a raw packet buffer 302 and are evaluated by a look ahead evaluator 304 prior of being played out by a reader and evaluation executor 309 reading the data packets from the raw packet buffer 302. The look ahead evaluator 304 is evaluating the received packets and stores the result of the evaluation in a packet evaluation result buffer 308. The look-ahead evaluator 304 evaluates the incoming data packet several packets ahead of the read out of the packet by the reader and evaluation executor 309. The result of the binary search of the look ahead evaluator may include meta-data/bookkeeping data associated with the stream. Therefore, when reading the data packet from the raw packet buffer, the reader and evaluation executor 309 has access to the result of the evaluation of the packet and the meta-data/bookkeeping data associated with the stream to which the packet belongs. The reader and evaluation executor may attach the meta-data/bookkeeping data, which are provided along with the result of the binary search, to the data packet when reading the data packet. To that end, the look ahead evaluator 304 only evaluates the first n words of a packet in order to determine whether the packet belongs to a subscribed data stream or not, in particular the first n words of the packet may correspond to the header of the data packet.

The packet filtering unit 300 comprises a writer and ingress good/bad evaluator 303. The good/bad evaluator evaluates the incoming packets for corruption. For example, by checking a check-sum. In case the packet is corrupted (bad packet), the packet is not stored and not evaluated. Only the good (not corrupted) packets are further processed and evaluated. The writer ingress good/bad evaluator 303 extracts at least the first n words of the packet and forwards the first n words to the packet header buffer 305 of the look-ahead evaluator 304. The first n words may comprise the part of the header comprising the stream properties identifying the stream to which the data packet belongs. In other words, the first n words comprise the information which are required to evaluate whether the packet belongs to a subscribed stream, i.e. whether the network device shall pass or reject the packet. The writer ingress good/bad evaluator 303 extracts the header of the data packet by extracting the first n-words of the packet and forwards the first n-words of the data packet to the packet header buffer 305.

The writer ingress good/bad evaluator 303 stores S2 the incoming data packets in the raw packet buffer 302. The raw packet buffer 302 stores or buffers the incoming data packets. In particular, the raw packet buffer 302 stores the data packet while the look ahead evaluator 304 evaluates whether the data packet belongs to a subscribed stream. The raw packet buffer 302 may store the data packets at least as long as it takes to evaluate the first n words of the packet or for a longer period. For example, the raw packet buffer may store the data packet for at least 5, 10 or 50 clock cycles, the time or amount of clock cycles that the data packet may be stored prior to the read out, in particular, depends on the packet length, the number of items in the binary list and/or the time between packets. Accordingly, the reader and evaluation executor 309 only reads the data packets from the raw packet buffer 302 after the evaluation process evaluating the first n words of that data packet is completed by the look ahead evaluator. The reader and evaluation executor, therefore, waits for the evaluation result before reading a packet from the raw packet buffer. The system works in a first-in first-out manner. The incoming packet is stored in the raw packet buffer 302. In parallel the evaluation result is generated and forwarded to the reader and evaluation executor. Therefore, the first result corresponds to the first packet stored in the raw packet buffer. The second result provided by the evaluator corresponds to the second received packet stored in the raw packet buffer 302. Thus, by keeping track on the number of received packets and the number of the corresponding evaluation results, the system keeps track on which result belongs to which packet.

The look-ahead evaluator 304 evaluates the first n words of the incoming data packet. The evaluation may be done while the incoming data packet is stored in the raw packet buffer 302. The header extractor 306 extracts information identifying the data stream to which the data belongs from the first n words of the data packet, or the packet header stored in the packet header buffer 305. The information identifying a data stream to which the data packet belongs may be destination and/or source IP addresses, the source or destination port number, the Ethernet type, the IP type, or VLAN-ID etc.

The extracted information is forwarded to a high-performance binary search evaluator 307. The binary search evaluator looks up the subscription, i.e. the binary search evaluator searches the extracted information, e.g. the properties of the packet identifying the stream to which the packet belongs, in a list comprising corresponding value or sets of values that identify the subscribed data streams. In case the binary search evaluator 307 matches the extracted information to a set of values in the list, the result of the evaluation is that the data packet corresponding to the extracted information belongs to a subscribed data stream. The result may further include meta-data/bookkeeping data of the stream to which the data packet belongs, for example the internal stream number, the output destination, the stream type, e.g. SMPTE 2110, SMPTE 2022, etc.. The result of this look-up by the binary search evaluator is stored in a packet evaluation result buffer 308. In contrast, if the extracted information does not match a set of values in the list, the result of the evaluation is that the data packet corresponding to the extracted information does not belong to a subscribed data stream. Accordingly, the result does not comprise any meta-data/bookkeeping data that can be attached to the data packet.

The binary search evaluator 307 may comprise a single evaluator unit to perform a binary search in order to evaluate or to determine whether the extracted information corresponds to a value or a set of values in the list comprising the sets of values identifying the subscribed streams.

For reference, it takes a single evaluator unit in an FPGA network product 10 (log₂(1000)) evaluations/searches to search an item in a list of 1000 possibilities. Due to FPGA timing and routing one search or evaluation might take 3 to 5 clock cycles. Accordingly, searching an item in a list of 1000 possibilities may require up to 50 clock cycles. Thus, to identify a stream in a list of 1000 streams requires up to 50 clock cycles. Therefore, performing such search for each packet would cause a significant delay, as it would require up to 50 clock cycles for each packet to determine whether the packet shall be processed or not.

The packet filtering unit 300 of the present disclosure allows to perform this evaluation in parallel to the buffering of the data packets and as look ahead, i.e. prior, to the readout of the data packet. By evaluating data packets before the packets are read out, the process of looking up whether the extracted packet properties correspond to properties stored in the list identifying the subscribed streams can be parallelized with the read out or outputting of a previous, already evaluated packet. The evaluation of the next data packet is performed while outputting the current packet. The present disclosure, however, is not limited to evaluating the next packet, but can also evaluate packets several packets ahead of the current packet. This is possible because the result of the evaluation is buffered in the evaluation packet evaluation result buffer 308, which allows to retrieve the evaluation result for the next packet from the buffer at the time the next packet is read out. The packet filtering unit 300 of the present disclosure thereby reduces the latency and improves the net bandwidth.

Instead of evaluating the packet at the time the data packet is read, the packet filtering unit 300 allows to analyze the data packet ahead, in particular prior to the play-out of the data packet, which allows for performing a binary search, which consumes several clock cycles, before the data packet is read from the raw packet buffer 302. The packet filtering unit 300 of the network product, therefore, determines whether to reject or accept (in case the packet belongs to a subscribed data stream) a data packet prior to the processing of the data packet by the network product and/or to forwarding the data packet to any downstream logic. This allows to perform a binary search which takes several clock cycles.

As shown in Fig. 3, the binary search evaluator 307 may comprise one or more evaluator units performing parallel binary searches. The one or more evaluator units may operate in parallel. The list comprising the value or sets of values or properties identifying corresponding subscribed data streams, i.e. the list identifying the subscribed data streams of the network product, may be a sorted list, for example a sorted table. Preferably, this sorted table is divided by the number of evaluator units into parts. Preferably, the parts are disjoint. Each evaluator only searches one of the different parts of the list. For example, instead of searching an item in a list of 1000 possibilities the list may be divided into four lists each containing 250 possibilities. Instead of using a single evaluator unit, four evaluator units may be used each of which performs a binary search on its dedicated part of the list. Therefore, the search can be parallelized. Splitting the list into four parts speeds up the evaluation. The effect is not linear. However, splitting the lists reduces list depth, which reduces the number of clock cycles to perform a single look up, which improves the total required number of clock cycles for a full evaluation. The number of parallel evaluator units is only limited by timing constraints of the FPGA performing the searches. Typically, 4 to 16 parallel evaluators can be implemented.

The binary search evaluator 307 therefore looks up whether the properties, for example a set of values, can be found/matched to a value or set of values stored in a list identifying the subscribed data streams. The result which includes the meta-data/bookkeeping data is stored in the packet evaluation result buffer 308. The result indicates whether to process or to discard a data packet associated with the result.

The packet filtering unit 300 comprises a reader and evaluation executor 309. The reader and evaluation executor 309 fetches the result from the packet evaluation result buffer 308 when reading the corresponding data packet from the raw packet buffer 302. The system operates in a first-in first-out (FIFO) type manner. For every packet stored in the raw packet buffer 302 and packet evaluation result is stored in the packet evaluation result buffer that can be fetched by the reader and evaluation executor 309 as soon as the result is present. Therefore, the reader and evaluation executor 309 evaluates whether the next to be read packet in the raw packet buffer 302 belongs to a subscribed data stream or not. In case the evaluation result indicates that the data packet belongs to a subscribed stream, the reader and evaluation executor 309 reads the data packet from the raw packet buffer. The reader and evaluation executor 309 reads the data packet from the raw packet buffer 302 and attaches the meta-data/bookkeeping data provided with the evaluation result to the data packet. The reader and evaluation executor 309 forwards the data packet to its proper destination in accordance with the meta-data/bookkeeping data. The meta-data/bookkeeping data can contain the stream ID, output destination, media type, etc., which allows to determine the output 310 to which the data packet shall be forwarded. The reader and evaluation executor 309 forwards the data packet read from the raw packet buffer 302 to the output 310. The output 310 may play out the data packet or the respective subscribed streams to respective output ports. The output may also provide the data packet to further processing units of the network product comprising the packet filtering unit 300. The network product is accordingly configured to receive all data streams of a network, but only to process those data streams to which the network product is subscribed to.

Further, in case the evaluation result indicates the data packet shall be dropped or discarded, i.e. in case the data packet does not belong to a subscribed data stream, the reader and evaluation executor 309 will skip the data packet and evaluate whether the next packet in the raw packet buffer belongs to a subscribed data stream by fetching the respective next result from the packet evaluation result buffer 308. In particular, by skipping the data packet that does not belong to a subscribed data stream, there is no need to read flush the raw packet buffer 302. Therefore, overall efficiency is increased.

The network product and accordingly the packet filtering unit 300 of the network product of the present disclosure may receive incoming traffic with over 100 Gbit/s. By evaluating whether the packets belong to subscribed data streams in parallel and ahead of the read out, the look up time does not impact the net bandwidth. The solution is scalable as a single evaluator can perform the binary search and the network product and the packet filtering unit 300 must only be configured to evaluate the packets so far ahead that the binary search can be performed.

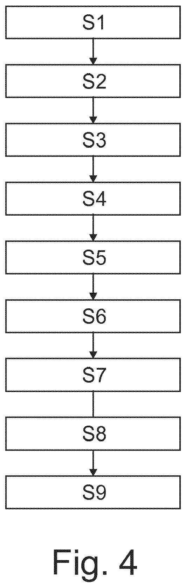

Fig. 4 shows a method of the present disclosure.

In step S1 incoming traffic is received at a MAC interface of a packet filtering unit 300 of a network product or any other FPGA logic capable of handling streams. The incoming traffic may comprise a plurality of data streams, wherein each data stream comprises data packets. The packet filtering unit 300 subscribes to a number of data streams.

In step S1, the writer ingress good/bad evaluator 303 determines whether a packet is corrupted. For example, the writer ingress good/bad evaluator 303 checks a checksum of the packet. Corrupted packets are ignored and not further processed, i.e. the packet is dropped. In case the writer ingress good/bad evaluator 303 determines that the data packet is uncorrupted, i.e. writer ingress good/bad evaluator 303 determines that the packet is a good packet, the packet is further processed by performing the following steps.

In step S2 the incoming data packets are buffered in a raw packet buffer 302. The incoming data packets are stored in incoming order, i.e. in a FIFO type manner. In particular, all data packets of the incoming traffic and accordingly all data packets of all incoming data stream are buffered. Each data packet comprises a packet header.

In step S3 the first n words of a data packet are extracted and forwarded to a packet header buffer 305 of a look ahead evaluator 304. The first n words of the data packet may comprise the packet header, i.e. the number n is chosen such that the n words comprise the packet header.

The first n words of each data packet stored in the packet header buffer 305 are evaluated in step S4.

In step S4 of the evaluation of the first n words of the incoming data packets available in the packet header buffer, information identifying the data stream to which the data packet corresponding to the first n words belongs are extracted from the first n words of the data packet. The information is the header content required to determine to which data stream the packet belongs, for example the information allows to determine whether the data packets corresponding to the extracted information shall be rejected, e.g. in case the data packet does not belong to a subscribed stream, or whether the data packet and the associated data stream shall be played out by the network device, e.g. in case the packet belongs to a subscribed stream. For example, the first n words are decoded into source IP-address, destination IP-address, VLAN-ID, port number etc.

In step S5, the packet filtering unit 300 of the network product, in particular the look-ahead evaluator 304 of the packet filtering unit 300, which comprises the packet header buffer 305, the header extractor 306, the binary search evaluator 307 and the packet evaluation result buffer 308, performs a binary search on the extracted information with the binary search evaluator 307 to determine whether the extracted information matches a value or set of values in a sorted list comprising sets of values identifying corresponding subscribed streams. Thus, the look-ahead evaluator 304 looks up whether the extracted information can be matched to the list. If this is the case, it is determined that the data packet belongs to a subscribed stream. The list therefore provides a set of values or sets of values that identify the subscribed streams. The list may further provide meta-data/bookkeeping data associated with each stream. The meta-data/bookkeeping data may be attached to each packet belonging to a respective subscribed stream.

In step S6, the result of the binary search, i.e. whether the information extracted from the first n words of a data packet could be matched to a set of values of the list identifying the subscribed streams, is stored in the packet evaluation result buffer 308. The result of the binary search may include meta-data/bookkeeping data. The result is an indication whether the data packet corresponding to the extracted information belongs to a subscribed stream or not. The result also indicates whether the corresponding data packet is to be rejected or played out.

In step S7, the reader and evaluation result executor 309 retrieves or fetches the result of the binary search from the packet evaluation result buffer 308 and determines whether the data packet corresponding to the result belongs to a subscribed data stream. The system to that end enforces order. For every packet stored in the raw packet buffer 302, a corresponding evaluation result is stored in the evaluation result buffer 308. As the system evaluates the data packets in the same order as they are stored in the raw packet buffer 302, the result and the packet become implicitly linked in particular by the order in which they are received.

In case the evaluation result is present in the packet evaluation result buffer 308 prior to the read out of the corresponding packet from the raw packet buffer 302, the packets are outputted back-to-back.

In step S8, in case the result indicates that the next packet to be read belongs to a subscribed data stream, the reader and evaluation executor 309 reads the data packet from the raw packet buffer 302 and attaches meta-data/bookkeeping data included in the result to the data packet. Further, the reader and evaluation evaluator 309 provides the data packet in step S9 to the output 310 of the packet filtering unit 300. Based on the meta-data/bookkeeping data the reader and evaluation executor 309 determines where to route the data packet. In case the result indicates that the next to be read data packet does not belong to a subscribed stream, the data packet is discarded. That is the reader jumps over the data packet in the raw packet buffer 308 and continues with the next data packet.

The steps S1 to S6 are performed multiple clock cycles before the read out of the data packet by the reader and evaluation executor 309. Thereby, the method allows to perform the evaluation whether a next packet belongs to a subscribed data stream while a current data packet (for which this information was determined previously) is read form the raw packet buffer and forwarded to any downstream logic.

During the evaluation of the data packet by evaluating the first n words of the data packet, the data packet is buffered in the raw packet buffer.

The network product comprising the packet filtering unit 300 and the method of the present disclosure allow to support over 2000 streams while achieving a maximum performance of over 160 Gbit/s.

Individual components or functionalities of the present invention are described in the embodiment and respective examples as software or hardware solutions. However, this does not mean that a functionality described as a software solution cannot also be implemented in hardware and vice versa. Similarly, mixed solutions are also conceivable for a person skilled in the art, in which components and functionalities are simultaneously partially realized in software and hardware.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

**List of reference signs**

| | | | |
|---|---|---|---|
| 100 | Ethernet product/processing device | 302 | Raw packet data buffer |
| 101 | MAC interface for incoming data streams | 303 | Writer and ingress good/bad evaluator |
| 102 | Packet filtering/stream subscription | 304 | Look-ahead evaluator |
| 103 | Processing unit | 305 | Packet header buffer |
| 104 | MAC interface for filtered/subscribed stream | 306 | Header extractor |
| 200 | Packet filtering/stream subscription system | 307 | binary search evaluator |
| 201 | Ethernet traffic | 308 | Packet evaluation result buffer |
| 202 | MAC interface | 309 | Reader (and evaluation extractor) |
| 203 | Packet properties extraction unit | S1 | Receiving incoming data packets |
| 204 | matcher | S2 | Buffering the incoming data packet in a raw packet buffer |
| 205 | OR unit | S3 | Extracting the first n words of the incoming data packets |
| 206 | Pass/block packet unit | S4 | Extracting information identifying a data stream from the first n words of the data packets |
| 300 | pcket filtering unit | S5 | Performing a binary search on the extracted information |
| 301 | Incoming packets | S6 | Storing the result of the binary search |
| | | S7 | Determining whether a data packet belongs to a subscribed stream |
| | | S8 | Reading the data packet from the raw packet buffer |
| | | S9 | Providing the data packet to the output |

## Claims

1. Method for evaluating and dispatching of data packets of a plurality of data streams and for delivering the data packets of subscribed data streams as output, wherein the method comprises:
- receiving (S1) incoming data packets (301) belonging to a plurality of data streams;
- buffering (S2) the incoming data packets in a raw packet buffer (302);
- extracting (S3) the first n words of the incoming data packets and forwarding (S4) the extracted first n words of the incoming data packets to a packet header buffer (305);
- evaluating the first n words of the incoming data packets that are available in the packet header buffer, wherein the evaluation comprises:
- extracting (S4) from the first n words of the incoming packets information identifying a data stream,
- performing (S5) a binary search on the extracted information to determine whether the incoming data packet from which the information was extracted belongs to one of the subscribed data streams,
- storing (S6) the result of the binary search in packet evaluation result buffer (308);
the method further comprises
- determining (S7) based on the result of the binary search whether a data packet associated with the result in the raw packet buffer (302) belongs to one of the subscribed streams;
- reading (S8), in case the data packet in the raw packet buffer (302) belongs to one of the subscribed streams, the data packet from the raw packet buffer (302) and providing (S9) the packet to the output.

2. The method of any of the preceding claims, wherein the evaluating steps (S4, S5, S6) are performed ahead of the steps of determining (S7) and reading (S8) the data packet from the raw packet buffer.

3. The method of claim 1 or 2, wherein the evaluation steps (S4, S5, S6) start several clocks cycles before reading the data packet from the raw packet buffer (302).

4. The method of any of the preceding claims, wherein the data packets belonging to one of the subscribed streams are read and outputted back-to-back.

5. The method of any of the preceding claims, wherein, in case the data packet does not belong to one of the subscribed streams the data packet is discarded.

6. The method of claim 5, wherein, in case the data packet does not belong to one of the subscribed streams, the method continues with determining whether the next data packet in the raw packet buffer (302) belongs to a subscribed stream.

7. The method of any of the preceding claims, wherein performing a binary search comprises:
- searching for the extracted information in a sorted list of one or more sets of values identifying the subscribed streams.

8. The method of any of the preceding claims, wherein the method comprises performing a plurality of binary searches in parallel, wherein the sorted list is divided by the number of parallel binary searches and each of the parallel binary searches searches one different part of the list.

9. A network product for evaluating and dispatching of data packets (301) of a plurality of data streams and to deliver the data packets of subscribed data streams as output, comprising a packet filtering unit (300), wherein the packet filtering unit (300) comprises:
- a raw packet buffer (302);
- a writer and ingress good or bad evaluator (303) configured to receive (S1) incoming data packets, to extract (S3) the first n words of the incoming data packets, to provide the first n words of the incoming data packets to a packet header buffer (305), and to provide (S2) the incoming data packets to a raw packet buffer, wherein the raw packet buffer (302) is configured to buffer the received packets;
- a look-ahead evaluator (304) comprising:
- a packet header buffer (305);
- a header extractor (306);
- at least one binary search evaluator (307);
- a packet evaluation result buffer (308);
the network product further comprising;
- a reader and evaluation executor (309);
- an output unit configured to output the subscribed content stream,
wherein the look ahead evaluator configured to evaluate the received first n words ahead of the corresponding packet prior to being read by the reader from the raw packet buffer; and wherein
the header extractor is configured to extract (S4) information identifying a data stream to which the packet belongs from the first n words associated with a received packet and to provide the extracted information to the binary search evaluator (307), wherein
the binary search evaluator (307) is configured to perform (S5) a binary search on the extracted information to determine whether the incoming data packet from which the information was extracted belongs to a subscribed data stream, and wherein
the packet evaluation result buffer (308) is configured to store (S6) the result of the binary search, and wherein
the reader and evaluation executor (309) is configured to determine (S7) based on the result of the binary search whether a packet associated with the result in the raw packet buffer (302) belongs to one of the subscribed streams, and to read (S8), in case the packet in the raw packet buffer (302) belongs to one of the subscribed streams, the packet from the raw packet buffer (302) and to provide (S9) the packet to the output.

10. The network product of claim 9 or claim 10, wherein the reader and evaluation executor is configured to output the data packets belonging to subscribed data stream back-to-back.

11. The network product of claims 9 to claim 10, wherein, when the evaluation result indicates that the associated data packet does not belong to one of the subscribed streams the reader and evaluation executor discards the packet, in particular, the reader and evaluation executor is configured to skip a packet in the raw packet buffer in case the evaluation result indicates that the packet does not belong to one of the subscribed data stream.

12. The network product of claims 9 to claim 11, wherein the binary search evaluator is configured to search for the extracted information in a sorted list.

13. The network product of claims 9 to claim 12 wherein the binary search evaluator comprises a plurality of binary search evaluator units and is configured to perform a plurality of binary searches in parallel.

14. The network product of claim 13, wherein the sorted list is divided by the number of parallel binary search units into different, wherein each of the parallel binary search units searches one different part of the list.

15. Computer program product that when executed on a processing unit performs the method of claims 1 to 9.
